# EUROPÄISCHE PATENTSCHRIFT

(11) **EP 2 052 003 B1**
(45) Veröffentlichungstag und Bekanntmachung des Hinweises auf die Patenterteilung: **17.03.2010**
(21) Anmeldenummer: 07788334.6
(22) Anmeldetag: 09.08.2007
(51) Int. Cl.: C08F 283/04, C04B 24/28, C04B 24/34, C09K 8/42, C09K 8/508, C09K 8/514

(54) **WASSERLÖSLICHE UND BIOLOGISCH ABBAUBARE COPOLYMERE AUF POLYAMIDBASIS UND DEREN VERWENDUNG**
WATER-SOLUBLE AND BIODEGRADABLE COPOLYMERS ON A POLYAMIDE BASIS AND USE THEREOF
COPOLYMÈRES HYDROSOLUBLES ET BIODÉGRADABLES À BASE DE POLYAMIDE ET LEUR UTILISATION

(30) Priorität: 18.08.2006 DE 102006038809
(43) Veröffentlichungstag der Anmeldung: 29.04.2009
(73) Patentinhaber: BASF Construction Polymers GmbH, 83308 Trostberg (DE)
(72) Erfinder: MATZINGER, Martin, 83308 Trostberg (DE); REICHENBACH-KLINKE, Roland, 83278 Traunstein (DE); KEILHOFER, Gregor, 83342 Tacherting (DE); PLANK, Johann, 83308 Trostberg (DE); SPINDLER, Christian, 67061 Ludwigshafen (DE)
(74) Vertreter: HOFFMANN EITLE
(86) Internationale Anmeldenummer: PCT/EP2007/058271
(87) Internationale Veröffentlichungsnummer: WO 2008/019987

(56) Entgegenhaltungen:
- EP-A- 0 194 889
- DE-A1- 19 921 904
- GB-A- 2 422 839

## Beschreibung

Gegenstand der vorliegenden Erfindung ist die neue Verwendung von Copolymeren auf Polyamidbasis.

Wasserlösliche Polymere, welche durch Polymerisation von ethylenisch ungesättigten Monomeren hergestellt werden, finden vielfältige Verwendung als Additive in bauchemischen Anwendungen und bei der Erschließung, Ausbeutung und Komplettierung unterirdischer Erdöl- und Erdgaslagerstätten.

Aus US 4,053,323 und US 3,936,408 ist die Verwendung von Polyamidosulfonaten als Fließmittel für hydraulische Bindemittel, insbesondere bei der Zementierung von Bohrlöchern bekannt. In WO 03/085013 A1 werden wasserlösliche Copolymere auf Basis olefinischer Sulfonsäuren und deren Verwendung als Wasserretentionsmittel für wässrige Baustoffsysteme diskutiert, welche mineralische Bindemittel enthalten. In DE 102 29 837 A1 sind polymere Wasserrückhaltemittel für Bohrspülungen und Zementschlämmen auf Basis Vinyl-haltiger Sulfonsäuren beschrieben. Gemäß dem US-Patent 4,654,085 wird Polyacrylamid zusammen mit Cellulose- und Stärkeethern als Additiv zur Verbesserung der Standfestigkeit von Zementformulierungen verwendet. Des Weiteren werden zur Verringerung des Wasserzuflusses bei der Förderung von Öl oder Gas wasserlösliche Copolymere auf Basis von Acrylamidoalkylensulfonsäure, N-Vinylamiden, Acrylamid und Vinylphosphonsäure eingesetzt (vgl. WO 03/033860 A2). Aus EP 0427107 A2 ist die Verwendung eines wasserlöslichen Copolymers bestehend aus ethylenisch ungesättigten Sulfonsäuren und Acrylamiden als rheologisches Additiv für Bohrspülungen bekannt. Ein weiteres Anwendungsgebiet für wasserlösliche Polymere, welche mit Hilfe einer Polymerisation von ethylenisch ungesättigten Monomeren hergestellt werden, ist die Entölung von mineralölhaltigen Sand- oder Gesteinsmassen, wie in EP 095730 A2 diskutiert. Die Verwendung von Copolymeren auf Basis von hydrolysiertem Acrylamid und Sulfonsäure-Derivaten als Wasserrückhaltemittel in Zementschlämmen ist dem US-Patent 4,015,991 zu entnehmen.

Wasserretentionsmittel dienen dazu, das Entweichen von Wasser aus Schlämmen anorganischer oder organischer Bindemittel oder Pigmente zu verringern oder vollständig zu verhindern. Ursache für den Wasserverlust sind meist Kapillarkräfte, die von porösen Untergründen ausgehen. Wasserretentionsmittel können entweder durch ihre chemische Struktur Wasser an sich binden oder aber die Ausbildung eines dichten Filterkuchens auf dem Untergrund fördern. Wasserretentionsmittel werden zu diesem Zweck wie eben beschrieben z. B. in Putzen, Fliesenklebern, Fugenmörtel, Spachtel- und Selbstverlaufsmassen, aber auch in Tiefbohrzementschlämmen eingesetzt. Außerdem werden sie unter anderem auch in wässrigen Tonsuspensionen, die z. B. als Bohrflüssigkeiten dienen können, verwendet. Aus dem Stand der Technik sind eine Reihe von Verbindungen mit derartigen Fähigkeiten bekannt. So beschreibt EP-A 1 090 889 Mischungen aus Ton und Guar als Wasserretentionsmittel. DE-OS 195 43 304 und US 5,372,642 offenbaren Cellulosederivate als Wasserretentionsmittel, EP-A 116 671, EP-A 483 638 und EP-A 653 547 beschreiben synthetische Polymere, die als Comonomer acrylamidosubstituierte Sulfonsäuren enthalten.

Alle diese aus dem Stand der Technik bekannten wasserlöslichen Polymere, welche durch Polymerisation von ethylenisch ungesättigten Monomeren hergestellt werden, sind in der Regel nicht biologisch abbaubar. Somit können sich diese Verbindungen in der Umwelt anreichern und zur Kontamination von Böden oder Gewässern beitragen. Dies ist von besonderer Relevanz, wenn Zementschlämmen z.B. mit Trinkwasser oder landwirtschaftlichen Nutzflächen in Kontakt kommen. Besonders zu berücksichtigen ist in diesem Zusammenhang auch die Verwendung von wasserlöslichen Polymeren bei der Exploration und Produktion von Erdöl oder Erdgas auf hoher See, also im sogenannten Off-shore-Bereich. Hier finden diese Polymere zum Beispiel als Wasserrückhaltemittel für zementäre Systeme in der Konstruktion von Bohrplattformen und in der Bohrlochzementierung Anwendung. Die eingesetzten Polymere können im ersten Fall durch Seewasser ausgewaschen werden und im letzteren Fall aus der Zementschlämme in wasserführende Formationsschichten übertreten. Deswegen sind nach der "Konvention für den Schutz der Marinen Umwelt im Nord-Ost-Atlantik" (OSPAR Convention) bioabbaubare Produkte beim Einsatz in mariner Umgebung zu bevorzugen.

Vereinzelt nennt der Stand der Technik bereits bioabbaubare, polymere Additive für Zementschlämmen. So sind aus US 6,019,835 modifizierte Lignosulfonate als bioabbaubare Fließmittel bekannt. Die vorveröffentlichte US-Anmeldung 2002/0005287 beschreibt Polyasparaginsäure als bioabbaubares Hochleistungsfließmittel. Wasserlösliche, biologisch abbaubare Copolymere auf Polyamidbasis und deren Verwendung sind aus der deutschen Offenlegungsschrift DE 103 14 354 A1 bekannt. Die dort beschriebenen Copolymere besitzen mindestens eine aufgepfropfte Seitenkette, aufgebaut aus Aldehyden und schwefelhaltigen Säuren und ggf. aus mindestens einer Verbindung der Reihe Ketone, aromatische Alkohole, Harnstoff-Derivate und Amino-s-triazine. Als bevorzugte Polyamid-Komponenten sind natürliche Polyamide, wie Caseine, Gelatinen und Collagene genannt. Verwendung finden die hier beschriebenen Copolymere insbesondere als Fließmittel oder Masserretentionsmittel für anorganische Bindemittel und Pigmente. Das geschilderte Wasserrückhaltevermögen geht überwiegend auf synergistische Wirkungsweisen der beschriebenen Copolymere zusammen mit modifizierten Polysacchariden zurück.

US 6,840,319 beschäftigt sich unter anderem mit Zusammensetzungen und bioabbaubaren Additiven zur Fluid-Loss-Kontrolle beim Zementieren unterirdischer Formationszonen. Bei diesem Additiv handelt es sich um ein Kondensationsprodukt von Gelatine, Formaldehyd, Natriumsulfit und Aceton, sowie eine mit Ethylenoxid substituierte Hydroxyethylzellulose.

Gegenstand von US 6,681,856 ist ein Verfahren zur Zementierung unterirdischer Zonen, bei dem auf bioabbaubare Dispergiermittel zurückgegriffen wird. Die jeweiligen Dispergiermittel umfassen ein Pfropfpolymer auf Polyamidbasis, welches mindestens eine Seitenkette enthält, die auf Aldehyd und Schwefel-haltige Säuren oder deren Salze zurückgeht.

Zwar sind alle diese wasserlöslichen Polymere biologisch abbaubar; sie weisen aber in der Regel den großen Nachteil auf, dass sie keine so große Variabilität der chemischen Zusammensetzung erlauben, wie die aus ethylenisch ungesättigten Monomeren aufgebauten Polymere, und daher auch in ihrer Anwendungsbreite, d.h. beispielsweise gegenüber Temperatur- oder Druckänderungen bzw. gegenüber Schwankungen des wässrigen Mediums bzgl. der Salzkonzentration, stark limitiert sind. Da eine Vielzahl verschiedener ethylenisch ungesättigter Monomere zur Verfügung stehen, welche jeweils unterschiedliche funktionelle Gruppen aufweisen, lässt sich meist durch Variation der Monomere für viele Anforderungen ein passendes Polymer "maßschneidern".

Gelatinepfropfpolymere sind generell aus der europäischen Patentanmeldung EP 0 015 880 bekannt. Gemäß dieser Veröffentlichung werden die Polymere in Empfangselementen eingesetzt und dienen dabei insbesondere als Farbstoffbeizmittel für fotographische Materialien. Die beschriebenen Pfropfpolymere bestehen mindestens aus drei Komponenten, bei denen es sich um wasserlösliche proteinartige Polymere, ein bei der Homopolymerisation ein wasserunlösliches Polymer lieferndes Monomer und schließlich um ein eine Sulfonatgruppe enthaltendes und bei der Homopolymerisation ein wasserlösliches Polymer lieferndes Monomer handelt. Gelatine wird als typischer Vertreter der wasserlöslichen, proteinartigen Polymere bezeichnet und Acrylmonomere als typische Vertreter der Monomere, die ein wasserunlösliches Polymer liefern.

DE 199 21 904 betrifft ein Verfahren zur Herstellung antimikrobieller Polymere durch Polymerisation von aliphatisch ungesättigten Monomeren, die mindestens einfach durch eine quartäre Aminogruppe funktionalisiert sind. Die Polymerisation kann auch als Pfropfpolymerisation eines Substrats durchgeführt werden. Ferner werden die Verwendung der so hergestellten antimikrobiellen Polymere zur Herstellung von Erzeugnissen, wie z.B. medizinischen Artikeln, Hygieneartikeln, Lacken, Schutzanstrichen etc. mit einer antimikrobiellen Beschichtung aus dem erfindungsgemäßen Polymer offenbart.

Der vorliegenden Erfindung lag die Aufgabe zugrunde, Copolymere auf Polyamidbasis, die mindestens eine aufgepfropfte Seitenkette aufgebaut aus ethylenisch ungesättigten Verbindungen enthalten, neuen Anwendungsbereichen zuzuführen.

Gelöst wurde diese Aufgabe durch die Verwendung dieser Copolymere als Additiv für hydraulische Bindemittel enthaltende Zusammensetzungen.

Überraschend wurde im Rahmen der vorliegenden Erfindung festgestellt, dass sie nicht nur ganz allgemein als Additiv für hydraulische Bindemittel enthaltende Zusammensetzungen geeignet sind, sondern insbesondere als Wasserrückhaltemittel vor allem im Hochleistungsbereich. Sie entfalten dabei generell eine nur wenig ausgeprägte verzögernde Wirkung, wobei sie ihre vorteilhaften Eigenschaften selbst unter Extrembedingungen wie hohe Temperaturen, hohe Drücke und hohe Salzkonzentrationen zeigen. Dies war in diesem Ausmaß nicht zu erwarten. Darüber hinaus wurde vollkommen unerwartet festgestellt, dass die bekannten Copolymere je nach Zusammensetzung der aufgepfropften Seitenkette auch als Fließmittel, rheologisches Additiv, Verzögerer oder Wasserzuflussregulierer hervorragend geeignet sind. Die Copolymere gemäß vorliegender Erfindung sind dabei innerhalb ihres unerwartet breiten Anwendungsspektrums im Gegensatz zu den bisher bekannten Vertretern zusätzlich bioabbaubar.

Aus den dargelegten Gründen schließt die vorliegende Erfindung eine spezielle Verwendung ein, bei der die Copolymeren auf Polyamid-Basis als Additiv für hydraulische Bindemittel enthaltende Zusammensetzungen und insbesondere als Wasserretentionsmittel eingesetzt werden. Mitumfasst ist ebenfalls die Verwendungsvariante bei der Erschließung, Ausbeutung und Komplettierung unterirdischer Erdöl- und Erdgaslagerstätten, bei Tiefenbohrungen und im Tunnelbau. Als besonders bevorzugt ist eine Verwendungsvariante anzusehen, bei der die Copolymeren bei der Zementierung von Öl- und Gasbohrungen insbesondere im Off-shore-Bereich Verwendung finden.

Als bevorzugt ist im Rahmen der vorliegenden Erfindung die Verwendung von Copolymeren anzusehen, die die Polyamid-Komponente in Anteilen von 10 bis 95 Gew.-% und bevorzugt von 50 bis 80 Gew.-% und die ethylenisch ungesättigte Komponente in Anteilen von 5 bis 90 Gew.-% und bevorzugt von 20 bis 50 Gew.-% enthalten.

Als besonders vorteilhaft hat es sich gezeigt, wenn Copolymere verwendet werden, die als Polyamid-Komponente natürliche Polyamide, vor allem in Form von Caseinen, Gelatinen, Kollagenen, Knochenleimen, Blutalbuminen und Sojaproteinen, synthetische Polyamide und hier besonders Polyasparaginsäuren oder Copolymere aus Asparagin- und Glutaminsäure enthalten. Die Erfindung schließt ebenfalls Polyamidkomponenten ein, die durch Oxidation, Hydrolyse oder Depolymerisation, wie z.B. durch enzymatischen Abbau aus den oben erwähnten Polyamiden hervorgehen, sowie beliebige Mischungen der genannten Vertreter.

Als ebenfalls bevorzugt gilt die Verwendung von Copolymeren, die als ethylenisch ungesättigte Komponente vinylhaltige Verbindungen in ihren O-, S-, P- und N-Formen enthalten. Ausgewählt werden derartige Verbindungen aus der Reihe der Vinylether, Acrylsäure, Methacrylsäure, 2-Ethylacrylsäure, 2-Propylacrylsäure, Vinylessigsäure, Vinylphosphonsäure, Croton- und Isocrotonsäure, Maleinsäure, Fumarsäure, Itaconsäure, Citraconsäure sowie deren Amide. Geeignet sind allerdings auch allgemein Styrole. Besonders bevorzugt sind die genannten Vertreter und deren equivalente Verbindungen in sulfonierter Form, wie sie vinylhaltige Sulfonsäuren darstellen. Besonders bevorzugt sind in diesem Zusammenhang 2-Acrylamido-2-methylpropansulfonsäure (AMPS), Vinylsulfonsäure, Methallylsulfonsäure und deren mindestens 1-wertige Salze. In speziellen Verwendungsfällen können die genannten Salze als Kation eines der Reihe Na⁺, K⁺, Ca²⁺, Mg²⁺, Zn²⁺, Ba²⁺ und/oder Fe²⁺ enthalten und als Anion ein Carbonat, Sulfat, Hydroxid oder Chlorid.

Im Rahmen der vorliegenden Erfindung hat sich die Verwendung vor allem von Copolymeren als besonders vorteilhaft gezeigt, die nach einem speziellen Verfahren hergestellt wurden:
Bevorzugt wird dabei eine Pfropfpolymerisation bei Temperaturen zwischen -10 und 250 °C und insbesondere zwischen 0 und 100 °C, die vorzugsweise jeweils in Gegenwart eines Lösemittels und insbesondere in Gegenwart eines polaren Lösemittels wie Wasser oder Dimethylsulfoxid durchgeführt wird.

Die Erfindung berücksichtigt aber auch die Bildung der Pfropfpolymere durch thermische Behandlung, wie z. B. durch Co-Trocknung des Polyamids und der zu pfropfenden Verbindung.

Insbesondere sind Copolymere geeignet, zu deren Seitenketten-Aufbau aus den einzelnen Bausteinen ("grafting from") als Lösemittel Wasser oder andere polare Lösemittel eingesetzt werden können. Polymere mit höheren Molmassen können erhalten werden, wenn entweder wasserfrei gearbeitet oder aber das Wasser während der Reaktion destillativ abgetrennt wird.

Neben der Modifizierung des Polyamids in Lösung kann aber auch in Substanz gepfropft werden. Auch mit dieser Variante werden Polymere mit vergleichsweise großer Molmasse erhalten. Sind die auf das Polyamid zu pfropfenden Verbindungen in Lösemitteln löslich, die nur schlecht mit Wasser mischbar sind, so können die Pfropfpolymere durch Grenzflächenkondensation aufgebaut werden: Dazu werden zunächst z.B. Sojaproteinisolat in einer wässerigen Phase und die zu pfropfenden Verbindungen in einer organischen Phase gelöst. Durch starkes Vermischen der beiden Phasen (z.B. durch einen Turax-Rührer) kann die Polykondensation an der Grenzfläche zwischen wässeriger und organischer Phase stattfinden.

Neben den beschriebenen Möglichkeiten können die Copolymere auch während der thermischen Co-Trocknung einer Lösung erzeugt werden. Hierbei kommt vor allem Wasser als Lösemittel in Frage. Der Trocknungsvorgang erfolgt am Besten durch Sprühtrocknung oder Walzentrocknung.

Alle Pfropfungsreaktionen sollten in einem Temperaturbereich zwischen -10 °C und 250°C durchgeführt werden. Wenn in Lösung gearbeitet wird, ist ein Temperaturbereich zwischen 0 °C und 130°C bevorzugt. Es kann bei Normaldruck, aber auch bei erhöhtem Druck gearbeitet werden.

Die vorliegende Erfindung schließt insbesondere eine Verwendungsalternative ein, bei der Copolymere eingesetzt werden, die durch Funktionalisierung der Polyamidkomponente mit einer Doppelbindung hergestellt wurden. Die Reaktion erfolgt dabei mit max. 10 Gew.-% einer Anhydrid-Verbindung vom Typ Maleinsäure- oder Methacrylsäureanhydrid oder einer Epoxid-Verbindung vom Typ Glycidylmethacrylat und eine sich anschließende Polymerisation der ethylenisch ungesättigten Verbindung an die erhaltene Doppelbindung. Möglich ist ebenfalls die Verwendung von Copolymeren, die zusätzlich vernetzt wurden, was insbesondere mit Hilfe von mehrfach funktionalen ethylenisch ungesättigten Verbindungen, wie z. B. Di- oder Trimethacrylaten, erfolgt sein kann.

Schließlich berücksichtigt die vorliegende Erfindung die Verwendung von Copolymeren, die eine Molmasse M̅ₙ > 5 000 g/mol, insbesondere > 10 000 g/mol, bevorzugt > 20 000 g/mol und besonders bevorzugt > 50 000 g/mol besitzen. Insgesamt unterliegt das Molekulargewicht der erfindungsgemäß verwendeten Copolymere allerdings keiner Einschränkung.

Abschließend sei noch darauf hingewiesen, dass sich für die beanspruchten Verwendungszwecke Copolymere insbesondere eignen, die wasserlöslich und/oder biologisch abbaubar sind, was vor allem im Ölfeldbereich und hier insbesondere bei den typischen Off-shore-Anwendungen von Bedeutung sein kann.

Die nachfolgenden Beispiele veranschaulichen die Vorteile der vorliegenden Erfindung.

### Beispiele

### 1. Herstellungsbeispiele:

### 1.1

169 g technische Gelatine (Bloom 450) wurde unter Erwärmen auf 70°C in 700 g Wasser gelöst. Der pH-Wert wurde mit NaOH auf 8,5 eingestellt. Danach wurden innerhalb von 60 min 1,4 g Maleinsäureanhydrid portionsweise zugegeben. Dabei wurde der pH-Wert durch die gleichzeitige Zudosierung von NaOH bei 8,5 gehalten. Nach der vollständigen Zugabe des Maleinsäureanhydrids wurde 60 min bei 70°C nachgerührt. Anschließend ließ man die Reaktionsmischung auf 60°C abkühlen und es wurde eine Lösung von 60 g AMPS in wässriger NaOH zugegeben. Der pH-Wert wurde auf 7,6 eingestellt und es wurde 60 min mit N₂ gespült. Die Reaktion wurde danach durch Zugabe von 0,2 g Na₂S₂O₈ gestartet und es wurde insgesamt 90 min bei 60°C polymerisiert. Während der Reaktion war ein deutlicher Viskositätsanstieg zu beobachten.
Das so erhaltene Copolymer besitzt in einer 15 %igen Lösung eine Viskosität von 2 000 cP (gemessen bei 60°C) und einen Gelpunkt von 26°C.

### 1.2:

Vorgehensweise analog Beispiel 1.1 unter Verwendung von 0,4 g einer Azoverbindung (Wako V 50) als Starter.
Das so erhaltene Copolymer besitzt in einer 15 %igen Lösung eine Viskosität von 112 cP (gemessen bei 60°C) und einen Gelpunkz von 29°C.

### 1.3:

Vorgehensweise analog Beispiel 1.2 unter Verwendung von Knochenleim statt technischer Gelatine.

Das so erhaltene Copolymer besitzt in einer 15 %igen Lösung eine Viskosität von 34 cP (gemessen bei 60 °C) und einen Gelpunkt von 10°C.

### 1.4:

67 g Knochenleim wurden unter Erwärmen auf 70°C in 270 g Wasser gelöst. Der pH-Wert wurde mit NaOH auf 8,5 eingestellt. Danach wurden innerhalb von 60 min 2,8 g Maleinsäureanhydrid portionsweise zugegeben. Dabei wurde der pH-Wert durch die gleichzeitige Zudosierung von NaOH bei 8,5 gehalten. Nach der vollständigen Zugabe des Maleinsäureanhydrids wurde 60 min bei 70°C nachgerührt. Anschließend ließ man die Reaktionsmischung auf 60°C abkühlen und es wurde eine Lösung von 50 g AMPS und 6 g *N,N-*Dimethylacrylamid (DMAA) in wässriger NaOH zugegeben. Der pH-Wert wurde auf 7,6 eingestellt und es wurde 60 min mit N₂ gespült. Die Reaktion wurde danach durch Zugabe von 0,8 g Wako V50 gestartet und es wurde insgesamt 90 min bei 60°C polymerisiert. Während der Reaktion war ein deutlicher Viskositätsanstieg zu beobachten.
Das so erhaltene Copolymer besitzt in einer 15 %igen Lösung eine Brookfield-Viskosität von 22 000 cP (gemessen bei 60 °C).

### 1.5:

93 g Knochenleim wurden unter Erwärmen auf 70 °C in 380 g Wasser gelöst. Der pH-Wert wurde mit NaOH auf 8,5 eingestellt. Danach wurden innerhalb von 60 min 4,0 g Maleinsäureanhydrid portionsweise zugegeben. Dabei wurde der pH-Wert durch die gleichzeitige Zudosierung von NaOH bei 8,5 gehalten. Nach der vollständigen Zugabe des Maleinsäureanhydrids wurde 60 min bei 70 °C nachgerührt. Anschließend ließ man die Reaktionsmischung auf 60 °C abkühlen und es wurde eine Lösung von 64 g AMPS, 19,6 g *N,N-*Dimethylacrylamid (DMAA) und 2 g Acrylsäure in wässriger NaOH zugegeben. Der pH-Wert wurde auf 7,6 eingestellt und es wurde 60 min mit N₂ gespült. Die Reaktion wurde danach durch Zugabe von 1,4 g tert.-Butylhydroperoxid gestartet und es wurde insgesamt 90 min bei 60 °C polymerisiert. Während der Reaktion war ein deutlicher Viskositätsanstieg zu beobachten. Das so erhaltene Copolymer besitzt in einer 15 %igen Lösung eine Brookfield-Viskosität von 137 000 cP (gemessen bei 60 °C).

### 1.6:

36 g Knochenleim wurden unter Erwärmen auf 70°C in 130 g Wasser gelöst. Der pH-Wert wurde mit 3 g 20%iger NaOH auf 8,5 eingestellt. Danach wurden innerhalb von 60 min 1,5 g Maleinsäureanhydrid portionsweise zugegeben. Dabei wurde der pH-Wert durch die gleichzeitige Zudosierung von 5 g 20%iger NaOH bei 8,5 gehalten. Nach der vollständigen Zugabe des Maleinsäureanhydrids wurde 120 min bei 70 °C nachgerührt. Anschließend wurden 23 g AMPS, 7 g *N,N*-Dimethylacrylamid (DMAA) und 0,7 g Acrylsäure zugegeben. Nach einer Wartezeit von 15 min wurde der pH-Wert mit 23 g 20%iger NaOH auf 7,6 eingestellt und es wurde ca. 60 min mit N₂ gespült. Die Reaktion wurde danach durch Zugabe von 1,2 g Wako V50 gestartet und es wurde insgesamt 90 min bei 70 °C polymerisiert. Während der Reaktion war ein deutlicher Viskositätsanstieg zu beobachten.
Das so erhaltene Copolymer besitzt in einer 15 %igen Lösung eine Brookfield-Viskosität von 160 cP (gemessen bei 60 °C).

### 1.7:

Vorgehensweise analog Beispiel 1.6 unter Verwendung von 21,8 g AMPS, 6,6 g DMAA, 0,7 g Acrylsäure und 1,4 g Vinyltrimethoxysilan als Monomermischung.
Das so erhaltene Copolymer besitzt in einer 15 %igen Lösung eine Brookfield-Viskosität von 4000 cP (gemessen bei 60°C) und einen Gelpunkt von 26°C.

### 1.8:

Vorgehensweise analog Beispiel 1.6 unter Verwendung von 22,5 g AMPS, 6,9 g DMAA und 1,2 g Vinylphosphonsäure als Monomermischung.
Das so erhaltene Copolymer besitzt in einer 15 %igen Lösung eine Brookfield-Viskosität von 150 cP (gemessen bei 60 °C) und einen Gelpunkt von 23 °C.

### 1.9:

Vorgehensweise analog Beispiel 1.6 unter Verwendung von 22 g AMPS, 6,7 g DMAA, 1 g Vinylphosphonsäure und 0,7 g Acrylsäure als Monomermischung.
Das so erhaltene Copolymer besitzt in einer 15 %igen Lösung eine Brookfield-Viskosität von 200 cP (gemessen bei 60°C) und einen Gelpunkt von 23°C.

### 1.10:

Vorgehensweise analog Beispiel 1.9 unter Verwendung von Ca(OH)₂ statt NaOH.
Das so erhaltene Copolymer besitzt in einer 15 %igen Lösung eine Brookfield-Viskosität von 190 cP (gemessen bei 60 °C) und einen Gelpunkt von 23°C.

### 1.11:

Vorgehensweise analog Beispiel 1.9 unter Zusatz von 0,1 g Methylenbisacrylamid als Vernetzer.
Das so erhaltene Copolymer besitzt in einer 15 %igen Lösung eine Brookfield-Viskosität von 4300 cP (gemessen bei 60°C).

### 1.12:

36 g Knochenleim wurden unter Erwärmen auf 70 °C in 130 g Wasser gelöst. Der pH-Wert wurde mit 3 g 20%iger NaOH auf 8,5 eingestellt. Danach wurden 1,5 g Maleinsäureanhydrid zugegeben. Dabei wurde der pH-Wert durch die gleichzeitige Zudosierung von 5 g 20%iger NaOH bei 8,5 gehalten. Anschließend wurde 120 min bei 70°C gerührt. Im nächsten Schritt wurden 12 g AMPS, 7 g *N,N*-Dimethylacrylamid (DMAA), 0,6 g Vinylphosphonsäure und 0,3 g Acrylsäure zugegeben. Nach einer Wartezeit von 15 min wurde der pH-Wert mit 13 g 20%iger NaOH auf 7,6 eingestellt und 7,3 g einer 1%igen wässrigen Lösung Methylenbisacrylamid zugegeben. Die Reaktion wurde danach durch Zugabe von 1,2 g Wako V50 gestartet und es wurde insgesamt 90 min bei 70°C polymerisiert. Während der Reaktion war ein deutlicher Viskositätsanstieg zu beobachten. Die gesamte Reaktion wurde unter Inertgasatmosphäre (N₂) durchgeführt.
Das so erhaltene Copolymer besitzt in einer 15 %igen Lösung eine Brookfield-Viskosität von 700 cP (gemessen bei 60°C) und einen Gelpunkt von 26°C.

### 1.13:

Vorgehensweise analog Beispiel 1.12 unter Verwendung von nur 8 g AMPS.
Das so erhaltene Copolymer besitzt in einer 15 %igen Lösung eine Brookfield-Viskosität von 19 000 cP (gemessen bei 60°C) und einen Gelpunkt von 28°C.

### 2. Anwendungsbeispiele:

### 2.1

Die Rheologie und der Fluid Loss wurden mit 2% bwoc des jeweiligen Additivs in folgender Schlämme gemäß der API-Norm nach 10A bei 140°F bestimmt:
700 g Class H Zement
266 g Wasser dest.
0,5 g Tributylphosphat (Entschäumer)

| Additiv | Fann 35 | | | | | | | Fluid loss [ml] |
|---|---|---|---|---|---|---|---|---|
| | T [°F] | 300 | 200 | 100 | 6 | 3 | 600 | |
| Techn. Gelatine (Vergleich) | 140 | 122 | 95 | 67 | 40 | 34 | 182 | > 1000 "blow out" |
| Bsp. 1.1 | 140 | 75 | 49 | 24 | 2 | 2 | 146 | 48 |
| Bsp. 1.2 | 140 | 89 | 56 | 29 | 3 | 2 | 160 | 60 |
| Bsp. 1.3 | 140 | 76 | 48 | 23 | 3 | 2 | 138 | 32 |

Die Beispiele zeigen, dass erfindungsgemäß die Copolymere nicht nur als Wasserretentionsmittel wirken, sondern auch die Fließeigenschaften der Schlämme signifikant verbessern.

### 2.2:

Die Rheologie und der Fluid Loss wurden mit 1% bwoc des jeweiligen Additivs in folgender Zementschlämme gemäß der API-Norm nach 10A bei 190°F bestimmt:
700 g Class H Zement
266 g Wasser dest.
0,5 g Tributylphosphat (Entschäumer)

| Additiv | Fann 35 | | | | | | | Fluid loss [ml] |
|---|---|---|---|---|---|---|---|---|
| | T [°F] | 300 | 200 | 100 | 6 | 3 | 600 | |
| Bsp. 1.9 | 190 | 77 | 51 | 27 | 3 | 2 | 135 | 68 |
| Bsp. 1.10 | 190 | 21 | 14 | 7 | 1 | 1 | 40 | 60 |
| Bsp. 1.11 | 190 | 117 | 83 | 46 | 5 | 3 | 195 | 58 |
| Bsp. 1.12 | 190 | 83 | 58 | 32 | 3 | 2 | 144 | 52 |
| Bsp. 1.13 | 190 | 73 | 49 | 26 | 2 | 1 | 126 | 56 |

Die Beispiele zeigen, dass die erfindungsgemäßen Copolymere auch bei hohen Temperaturen eine sehr gute Wirkung als Fluid-Loss-Additiv aufweisen.

### 2.3:

Das Copolymer aus Herstellungsbeispiel 1.5 wurde nach den Richtlinien der API (API Recommended Practice 13B-1, 1st Edition, 1990, S. 12ff) als Fluid-Loss-Additiv in folgenden Bohrspülungen untersucht.

| | | | |
|---|---|---|---|
| Meerwasserspülung: | 350 g | Bentonit-Suspension | (4 Gew.-%) |
| | 14 g | Meersalz nach DIN 50900 | |
| | 14 g | Copolymer | |
| NaCl-Spülung: | 350 g | Bentonit-Suspension | (4 Gew.-%) |
| | 118.1 g | NaCl | |
| | 10,5 g | Copolymer | |

Bei Raumtemperatur und einem Druck von 100 psi wurde in der Meerwasserspülung ein Fluid-Loss von 5,2 ml und in der NaCl-Spülung ein Fluid-Loss von 3,8 ml gefunden.

Das Beispiel zeigt, dass erfindungsgemäß die Copolymere auch als Fluid-Loss-Additiv in Bohrspülungen wirken.

### 3. Untersuchung der Bioabbaubarkeit:

Das Copolymer aus Herstellungsbeispiel 1.8 wurde bzgl. seiner Bioabbaubarkeit in Meerwasser nach OECD 306 (closed bottle rest) evaluiert. Nach 28 Tagen war das Copolymer zu 45% abgebaut.

## Patentansprüche

1. Verwendung von Copolymeren auf Polyamidbasis, die mindestens eine aufgepfropfte Seitenkette aufgebaut aus ethylenisch ungesättigten Verbindungen enthalten, als Additiv für hydraulische Bindemittel enthaltende Zusammensetzungen

2. Verwendung nach Anspruch 1 als Wasserretentionsmittel.

3. Verwendung nach einem der Ansprüche 1 oder 2 bei der Zementierung von Öl- und Gasbohrungen, bevorzugt im Offshore-Bereich.

4. Verwendung nach einem der Ansprüche 1 bis 3, **dadurch gekennzeichnet, dass** die Copolymere die Polyamid-Komponente in Anteilen von 10 bis 95 Gew.-% und bevorzugt von 50 bis 80 Gew.-% und die ethylenisch ungesättigte Komponente in Anteilen von 5 bis 90 Gew.-% und bevorzugt von 20 bis 50 Gew.-% enthalten.

5. Verwendung nach einem der Ansprüche 1 bis 4, **dadurch gekennzeichnet, dass** die Polyamid-Komponente ausgewählt wird aus der Reihe der natürlichen Polyamide, besonders bevorzugt Caseine, Gelatine, Kollagene, Knochenleime, Blutalbumine, Sojaprotein und deren durch Oxidation, Hydrolyse oder Depolymerisation entstandene Abbauprodukte, synthetische Polyamide und deren durch Oxidation, Hydrolyse oder Depolymerisation entstandene Abbauprodukte sowie Mischungen daraus aufweist.

6. Verwendung nach einem der Ansprüche 1 bis 5, **dadurch gekennzeichnet, dass** die Copolymere als ethylenisch ungesättigte Komponente vinylhaltige Verbindungen in ihren O-, S-, P- und N-Formen ausgewählt aus der Reihe der Vinylether, Acrylsäure, Methacrylsäure, 2-Ethylacrylsäure, 2-Propylacrylsäure, Vinylessigsäure, Vinylphosphonsäure, Croton- und Isocrotonsäure, Maleinsäure, Fumarsäure, Itaconsäure, Citraconsäure sowie deren Amide und Styrole und bevorzugt in sulfonierter Form wie vinylhaltige Sulfonsäure der Reihe 2-Acrylamido-2methylpropansulfonsäure (AMPS), Vinylsulfonsäure, Methallylsulfonsäure und deren mindestens 1-wertige Salze enthalten.

7. Verwendung nach Anspruch 6, **dadurch gekennzeichnet, dass** die Salze als Kation eines der Reihe Na⁺, K⁺, Ca²⁺, Md²⁺, Zn²⁺, Ba²⁺ und/oder Fe²⁺ und als Anion ein Carbonat, Sulfat, Hydroxid oder Chlorid enthalten.

8. Verwendung nach einem der Ansprüche 1 bis 7, **dadurch gekennzeichnet, dass** die Copolymere durch direkte Pfropfpolymerisation bei Temperaturen zwischen -10 und 250°C und insbesondere zwischen 0 und 100 °C, vorzugsweise jeweils in Gegenwart eines Lösemittels und insbesondere eines polaren Lösemittels wie Wasser oder Dimethylsulfoxid hergestellt wurden.

9. Verwendung nach einem der Ansprüche 1 bis 7, **dadurch gekennzeichnet, dass** die Copolymere durch Funktionalisierung der Polyamid-Komponente mit einer Doppelbindung, bevorzugt durch Reaktion mit max. 10 Gew.-% einer Anhydrid-Verbindung vom Typ Maleinsäure- oder Methacrylsäure-Anhydrid oder einer Epoxid-Verbindung vom Typ Glycidylmethacrylat, und eine sich anschließende Polymerisation der ethylenisch ungesättigten Verbindung an die erhaltene Doppelbindung hergestellt wurden.

10. Verwendung nach einem der Ansprüche 1 bis 9, **dadurch gekennzeichnet, dass** die Copolymere zusätzlich vernetzt wurden, insbesondere mit Hilfe von mehrfach funktionalen ethylenisch ungesättigten Verbindungen wie z. B. Di- oder Trimethacrylaten.

11. Verwendung nach einem der Ansprüche 1 bis 10, **dadurch gekennzeichnet, dass** die Copolymere eine Molmasse M̅ₙ> 5 000 g/mol, insbesondere
> 10 000 g/mol, bevorzugt > 20 000 g/mol und besonders bevorzugt
> 50 000 g/mol besitzen.

12. Verwendung nach einem der Ansprüche 1 bis 11, **dadurch gekennzeichnet, dass** die Copolymere wasserlöslich sind.

13. Verwendung nach einem der Ansprüche 1 bis 12, **dadurch gekennzeichnet, dass** die Copolymere biologisch abbaubar sind.

## Claims

1. Use of copolymers based on polyamide, which contain at least one grafted side chain constructed from ethylenically unsaturated compounds, as an additive for compositions containing hydraulic binders.

2. Use according to claim 1 as a water-retaining agent.

3. Use according to one of claims 1 or 2 in the cementing of oil wells and gas wells, preferably of the off-shore type.

4. Use according to one of claims 1 to 3, **characterised in that** the copolymers contain the polyamide component in proportions of 10 to 95 wt.% and preferably of 50 to 80 wt.% and the ethylenically unsaturated component in proportions of 5 to 90 wt.% and preferably of 20 to 50 wt.%.

5. Use according to one of claims 1 to 4, **characterised in that** the polyamide component is selected from the series of natural polyamides, particularly preferably caseins, gelatines, collagens, bone glues, blood albumins, soybean proteins and has degradation products thereof produced by oxidation, hydrolysis or depolymerisation, synthetic polyamides and degradation products thereof produced by oxidation, hydrolysis or depolymerisation and mixtures thereof.

6. Use according to one of claims 1 to 5, **characterised in that** the copolymers contain as the ethylenically unsaturated component, vinyl-containing compounds in their O, S, P and N forms selected from the series of vinyl ether, acrylic acid, methacrylic acid, 2-ethyl acrylic acid, 2-propyl acrylic acid, vinyl acetic acid, vinyl phosphonic acid, crotonic acid and isocrotonic acid, maleic acid, fumaric acid, itaconic acid, citraconic acid and amides and styrenes thereof and preferably in sulphonated form, such as vinyl-containing sulphonic acid of the series 2-acrylamido-2-methylpropane sulphonic acid (AMPS), vinyl sulphonic acid, methallyl sulphonic acid and at least 1-valency salts thereof.

7. Use according to claim 6, **characterised in that** the salts contain as the cation, one of the series Na⁺, K⁺, Ca²⁺, Mg²⁺, Zn²⁺, Ba²⁺ and/or Fe²⁺ and as the anion, a carbonate, sulphate, hydroxide or chloride.

8. Use according to one of claims 1 to 7, **characterised in that** the copolymers have been produced by direct graft polymerisation at temperatures between -10 arid 250°C and in particular between 0 and 100°C, preferably in each case in the presence of a solvent and in particular of a polar solvent, such as water or dimethyl sulphoxide.

9. Use according to one of claims 1 to 7, **characterised in that** the copolymers have been produced by functionalisation of the polyamide component with a double bond, preferably by reaction with a maximum 10 wt.% of an anhydride compound of the type maleic acid anhydride or methacrylic acid anhydride or an epoxide compound of the type glycidyl methacrylate, and a subsequent polymerisation of the ethylenically unsaturated compound to the double bond obtained.

10. Use according to one of claims 1 to 9, **characterised in that** the copolymers have been crosslinked additionally, in particular with the aid of multifunctional ethylenically unsaturated compounds, such as for example dimethacrylates or trimethacrylates.

11. Use according to one of claims 1 to 10, **characterised in that** the copolymers have a molar weight Mₙ > 5,000 g/mole, in particular > 10,000 g/mole, preferably > 20,000 g/mole and particularly preferably > 50,000 g/mole.

12. Use according to one of claims 1 to 11, **characterised in that** the copolymers are water-soluble.

13. Use according to one of claims 1 to 12, **characterised in that** the copolymers are biodegradable.

## Revendications

1. Utilisation de copolymères à base de polyamide qui contiennent au moins une chaîne latérale greffée, constituée de composés éthyléniquement insaturés, en tant qu'additif pour des compositions contenant des liants hydrauliques.

2. Utilisation selon la revendication 1, en tant que moyen de rétention d'eau.

3. Utilisation selon l'une des revendications 1 ou 2 lors de la cimentation de puits de forage pétroliers et gaziers, de préférence dans le domaine offshore.

4. Utilisation selon l'une des revendications 1 à 3, **caractérisée en ce que** lesdits copolymères contiennent le composant polyamide dans des proportions comprises entre 10 et 95 % en poids et préférentiellement entre 50 et 80 % en poids et le composant éthyléniquement insaturé dans des proportions comprises entre 5 et 90 % en poids et préférentiellement entre 20 et 50 % en poids.

5. Utilisation selon l'une des revendications 1 à 4,
**caractérisée en ce que** ledit composant polyamide est choisi d'une série des polyamides naturelles, particulièrement de préférence de caséines, de gélatines, de collagènes, d'ostéocolles, d'albumines sanguines, de protéines de soja et de leurs métabolites obtenus par oxydation, hydrolyse ou dépolymérisation, les polyamides synthétiques et leurs métabolites obtenus par oxydation, hydrolyse ou dépolymérisation ainsi que des mélanges d'entre eux.

6. Utilisation selon l'une des revendications 1 à 5, **caractérisée en ce que** lesdits copolymères contiennent, en tant que composants éthyléniquement insaturés, des composés vinyliques sous leurs formes O, S, P et N, choisis parmi la série des éthers vinyliques, l'acide acrylique, l'acide méthacrylique, l'acide 2-éthylacrylique, l'acide 2-propylacrylique, l'acide vinylacétique, l'acide vinylphosponique, l'acide crotonique et isocrotonique, l'acide maléique, l'acide fumarique, l'acide itaconique, l'acide citraconique, ainsi que de leurs amides et styrènes, et de préférence sous forme un groupe sulfonique, tels que l'acide sulfonique contenant des groupes vinyle de la série comprenant l'acide 2-acrylamido-2-méthylpropansulfonique (AAMS), l'acide vinylsulfonique, l'acide méthallylsulfonique et leurs sels dont la valence est au moins égale à 1.

7. Utilisation selon la revendication 6, **caractérisée en ce que** les sels contiennent en tant que cation un issu de la série Na⁺, K⁺, Ca²⁺, Mg²⁺, Zn²⁺, Ba²⁺ et/ou Fe²⁺ et en tant qu'anion choisi un carbonate, un sulfate, un hydroxyde ou un chlorure.

8. Utilisation selon l'une des revendications 1 à 7,
**caractérisée en ce que** les copolymères sont préparés par une polymérisation par greffage directe, à des températures entre -10 et 250°C et notamment entre 0 et 100 °C, de préférence à chaque fois en présence d'un solvant et notamment d'un solvant polaire tel que de l'eau ou du diméthylsulfoxyde.

9. Utilisation selon l'une des revendications 1 à 7,
**caractérisée en ce que** les copolymères sont préparés en introduisant une double liaison dans ledit composant polyamide, de préférence par réaction avec au plus 10 % en poids d'un composé anhydride de type anhydride d'acide maléique ou d'acide méthacrylique ou d'un composé époxyde de type méthacrylate de glycidyle, et suivie d'une polymérisation du composé éthyléniquement insaturé au niveau de la double liaison obtenue.

10. Utilisation selon l'une des revendications 1 à 9,
**caractérisée en ce que**, en outre, les copolymères ont été réticulés, notamment à l'aide de composés éthyléniquement insaturés polyfonctionnels tels que, par exemple, des di- ou triméthacrylates.

11. Utilisation selon l'une des revendications 1 à 10, **caractérisée en ce que** les copolymères possèdent une masse molaire M̅n > 5 000 g/mol, notamment
> 10 000 g/mol, de préférence > 20 000 g/mol et, avec une préférence particulière,
> 50 000 g/mol.

12. Utilisation selon l'une des revendications 1 à 11, **caractérisée en ce que** les copolymères sont hydrosolubles.

13. Utilisation selon l'une des revendications 1 à 12, **caractérisée en ce que** les copolymères sont biodégradables.
